# EUROPÄISCHE PATENTSCHRIFT

(11) **EP 1 909 492 B1**
(45) Veröffentlichungstag und Bekanntmachung des Hinweises auf die Patenterteilung: **30.12.2009**
(21) Anmeldenummer: 07014925.7
(22) Anmeldetag: 30.07.2007
(51) Int. Cl.: H04N 5/235

(54) **Digitale Laufbildkamera**
Digital motion picture camera
Caméra cinématographique numérique

(30) Priorität: 02.10.2006 DE 102006046720
(43) Veröffentlichungstag der Anmeldung: 09.04.2008
(73) Patentinhaber: Arnold & Richter Cine Technik GmbH & Co. Betriebs KG, 80799 München (DE)
(72) Erfinder: Cieslinski, Michael, 82008 Unterhaching (DE)
(74) Vertreter: Manitz, Finsterwald & Partner GbR

(56) Entgegenhaltungen:
- EP-A1- 1 343 312
- US-A1- 2001 030 708
- US-B1- 6 204 881

## Beschreibung

Die Erfindung betrifft eine digitale Laufbildkamera zum Aufnehmen von Laufbildern, mit einer optoelektronischen Sensoreinrichtung, die eine Vielzahl von Sensorelementen zur Erzeugung von Empfangssignalen in Abhängigkeit von der Belichtungszeit aufweist, einer Digitalisierungseinrichtung zur Digitalisierung der Empfangssignale und einer elektronischen Steuereinrichtung zur Steuerung der Belichtungszeit und des Auslesens der Empfangssignale sowie zur Auswertung dieser Empfangssignale. Eine Laufbildkamera dieser Art ist in der EP 1 343 312 B1 beschrieben.

Bei derartigen Laufbildkameras können die elektrischen Empfangssignale der fotoelektrischen Sensorelemente der Sensoreinrichtung, ggf. nach einer Verstärkung, noch innerhalb der Kamera digitalisiert werden, so dass die Bildinformationen unmittelbar in einem digitalen Format vorliegen und somit ohne weiteres elektronisch bearbeitet sowie ohne wesentlichen Qualitätsverlust vervielfältigt werden können. Es kann beispielsweise auch die Frequenz, mit der die aufeinander folgenden Laufbilder aufgenommen werden, variiert werden, und zwar in einer vom Anwender vorgebbaren Weise. Derartige digitale Laufbildkameras sind also alternativ zu Laufbildkameras zur Belichtung eines fotochemischen Negativfilms insbesondere auch für bewegte Filmaufnahmen mit hoher Bildqualität, also beispielsweise auch für Fernsehspielfilme, Kinowerbung, Kinofilme oder auch industrielle oder medizinische Anwendungen einsetzbar.

Es sind zwei grundlegend unterschiedliche Arten von optoelektronischen Bildsensoren bekannt, nämlich sogenannte integrierende Sensoren und sogenannte nicht integrierende Sensoren.

Bei den integrierenden Sensoren handelt es sich um Sensoren, deren Ausgangssignal abhängig vom Integral der Lichtmenge ist, die auf ein jeweiliges Bildelement oder Pixel auftrifft. Sie besitzen in den meisten Fällen eine nahezu lineare Kennlinie, was bedeutet, dass das Ausgangssignal in etwa proportional zur auftreffenden Lichtmenge und bei konstanter Helligkeit damit proportional zum Produkt aus Belichtungszeit und Helligkeit ist. Dagegen ist bei den nicht integrierenden Sensoren das Ausgangssignal vom Momentanwert der auf ein Bildelement oder Pixel auftreffenden Lichtmenge abhängig. Sie besitzen häufig eine logarithmische Kennlinie. Das Ausgangssignal ist hier also etwa proportional zum Logarithmus der im Augenblick auf das Bildelement auftreffenden Lichtmenge.

Die nicht integrierenden Sensoren weisen den Vorteil auf, dass sie aufgrund der logarithmischen Kennlinie einen großen Dynamikumfang aufweisen. Die Signale dieser Sensoren sind jedoch in hohem Maße rauschbehaftet, wobei das Rauschen noch verstärkt wird, wenn die Signale wieder in den linearen Bereich zurücktransformiert werden. Da das Ausgangssignal dieser Sensoren vom Augenblickswert der Belichtung abhängt, ist eine zeitlich konstante Beleuchtung der Szene erforderlich. Ein Einsatz solcher Sensoren in Kameras mit einem mechanischen Verschluss oder "Shutter", wie sie insbesondere bei der Laufbildaufzeichnung verwendet werden, ist daher praktisch ausgeschlossen, nachdem das Ausgangssignal gerade nicht proportional zu der Lichtmenge ist, die auf das betreffende Bildelement oder Pixel auftraf, als der Verschluss geöffnet war.

Integrierende Sensoren besitzen den Vorteil, dass deren Ausgangssignal proportional zum Produkt aus mittlerer Helligkeit und Belichtungszeit ist und somit schwankende Beleuchtungshelligkeiten, wie sie zum Beispiel bei Leuchtstofflampen auftreten, zumal dann keine Rolle spielen, wenn man als Belichtungszeit ein ganzzahliges Vielfaches der Periode der Helligkeitsschwankung wählt. Dieser Sensortyp lässt sich auch in eine Kamera mit einem mechanischen Verschluss integrieren. Die Signale dieser integrierenden Sensoren besitzen nur ein geringes Rauschen, infolge der linearen Kennlinie ist jedoch der Dynamikumfang begrenzt.

Grundsätzlich kann zur Erweiterung des Dynamikumfangs die Belichtungszeit variiert werden. Damit lässt sich jedoch nur die Belichtung des gesamten Bildes variieren, während der Dynamikumfang innerhalb des Bildes nicht vergrößert wird.

Es ist auch denkbar, mehrere Bilder mit unterschiedlicher Belichtungszeit nacheinander aufzunehmen und miteinander zu kombinieren. Wird beispielsweise ein Bild mit einer Belichtungszeit von 2 ms und ein weiteres Bild mit einer Belichtungszeit von 20 ms aufgenommen, so können alle dunklen Bildbereiche aus dem Bild mit der relativ längeren Belichtungszeit genommen werden und die Bildbereiche, bei denen das Bild mit der längeren Belichtungszeit übersteuert ist, können aus dem Bild relativ geringerer Belichtungszeit übernommen werden.

Neben den integrierenden und den nicht integrierenden Sensortypen gibt es auch Mischformen, das heißt Sensoren, die bis zu einer bestimmten Ansteuerung linear und integrierend arbeiten und erst bei hoher Ansteuerung in einen Modus mit logarithmischer Kennlinie übergehen. Mit solchen Mischformen wird zwar ein relativ großer Dynamikumfang erreicht, ein Betrieb mit einem mechanischen Verschluss oder "Shutter" ist jedoch nicht möglich, da in dem Modus mit logarithmischer Kennlinie das Ausgangssignal von der momentanen Helligkeit abhängt und demzufolge kein logarithmisches Ausgangssignal mehr vorliegt, nachdem der mechanische Verschluss geschlossen wurde.

Die zur Aufnahme von Bewegtbildern für eine spätere Darstellung im Kino verwendeten Kameras besitzen üblicherweise eine Spiegelumlaufblende, die während eines Teils der Umlaufzeit das Licht auf den Film fallen lässt und während des anderen Teils der Umlaufzeit das Licht in einen optischen Sucher spiegelt, während der Film transportiert wird.

Wird nun in einer derartigen Kamera anstelle eines Films ein elektrooptischer Bildsensor verwendet, so kann nur ein Sensor vom integrierenden Typ eingesetzt werden, bei dem das Ausgangssignal proportional zum Integral der Helligkeit während des Zeitraums ist, in dem die Spiegelumlaufblende den Strahlengang freigibt. Nur dann entsteht ein gleichartiger Bildeindruck bei bewegten Szenen oder beispielsweise Kameraschwenks.

Aufgrund ihrer linearen Charakteristik besitzen die integrierenden Sensoren jedoch einen begrenzten Dynamikumfang, der beispielsweise im Bereich von 500:1 bis 2000:1 liegt. Demgegenüber besitzt ein fotografischer Film einen Dynamikumfang von über 10.000:1. Demzufolge können elektrooptische Sensoren nur eingeschränkt für diese Anwendung genutzt werden.

Würde man auf die Spiegelumlaufblende verzichten und durch eine entsprechende Ansteuerung des Sensors eine gleichartige Belichtungszeit wie bei einer mechanischen Laufbildkamera einstellen, so könnte man zur Dynamikerweiterung mehrere Bilder, beispielsweise zwei Bilder mit unterschiedlicher Belichtungszeit, nacheinander aufnehmen und zu einem Bild mit erhöhter Dynamik kombinieren. Dabei tritt jedoch bei bewegten Szenen ein Problem auf. Da die beiden Bilder zu verschiedenen Zeitpunkten aufgenommen werden, zeigen sie bewegte Objekte in verschiedenen Positionen. So besitzt beispielsweise eine Kugel häufig einen Glanzpunkt infolge der sich auf ihr spiegelnden Sonne. Rollt nun eine solche Kugel durch das Bild, so verschiebt sich je nach Geschwindigkeit die aufgezeichnete Lage des Glanzpunktes entlang der Bewegungsrichtung, wobei er bei hohen Geschwindigkeiten schließlich sogar außerhalb der Kugel zu liegen kommt. Dadurch ergibt sich ein äußerst irritierender Bildeindruck. Dieser Effekt kann zwar durch Schätzen der Bewegen und Kompensation der Lage reduziert oder gar beseitigt werden. Dies ist jedoch äußerst aufwändig und in Echtzeit praktisch nicht durchführbar. Zudem ist bei komplizierten Szenen eine zuverlässige Bewegungsschätzung nicht möglich.

Um die jeweilige Kamera universell einsetzen zu können, ist ein hoher Dynamikumfang erforderlich, der mindestens so hoch sein sollte wie der Dynamikumfang von fotografischem Film. Durch konstruktive Maßnahmen am Sensor lässt sich der Dynamikumfang praktisch jedoch nicht so weit steigern, dass mit einer digitalen Laufbildkamera ein vergleichbarer Dynamikumfang wie bei einer Laufbildkamera zur Belichtung eines fotochemischen Negativfilms erreicht wird. Der nötige Dynamikumfang könnte zwar erreicht werden, indem mehrere Bilder unterschiedlicher Belichtungszeit nacheinander aufgenommen und miteinander kombiniert werden. Bewegte Objekte bringen jedoch die zuvor erläuterten Fehler mit sich.

Aus der US 6204881 B1 ist eine digitale Kamera mit den Merkmalen des Oberbegriffs des Anspruchs 1 bekannt. Um den Dynamikumfang zu erhöhen, werden Bildsignale mit unterschiedlichen Belichtungszeiten erzeugt und miteinander kombiniert.

Aus der US 2001/0030708 A1 ist es ebenfalls bekannt, zur Erhöhung des Dynamikumfangs unter Vermeidung eines Verschmierens der Bildinformation bei sich bewegenden Motiven mehrere Bilder mit unterschiedlichen Belichtungszeiten zu erzeugen, wobei für die mehreren Bilder ein gemeinsamer Aufnahmebeginn oder ein gemeinsames Aufnahmeende vorgesehen ist.

Der Erfindung liegt die Aufgabe zugrunde, eine verbesserte digitale Laufbildkamera der eingangs genannten Art zu schaffen, bei der die zuvor genannten Probleme beseitigt sind. Dabei soll unter Vermeidung des Ortsversatzes bei bewegten Motiven insbesondere der Dynamikumfang erweitert werden.

Erfindungsgemäß wird diese Aufgabe durch eine digitale Laufbildkamera mit den Merkmalen des Anspruchs 1 gelöst.

Werden beispielsweise zwei Bilder unterschiedlicher Belichtungszeit miteinander kombiniert, so liegt der Zeitmittelpunkt des Bildes relativ kürzerer Belichtungszeit innerhalb des gesamten Zeitraumes zwischen dem Aufnahmebeginn und dem Aufnahmeende des Bildes relativ längerer Belichtungszeit, wobei die längere Belichtung insbesondere auch unterteilt oder unterbrochen sein kann. Unter zumindest im Wesentlichen zusammenfallenden Zeitmittelpunkten ist hier also insbesondere für den Fall, dass zwei Bilder unterschiedlicher Belichtungszeit miteinander kombiniert werden, zu verstehen, dass der Aufnahmezeitraum eines jeweiligen Bildes relativ kürzerer Belichtungszeit innerhalb des Gesamtaufnahmezeitraumes vom erstmaligen Aufnahmebeginn bis zum ggf. zweiten Aufnahmeende eines jeweiligen Bildes relativ längerer Belichtungszeit liegt und bevorzugt mittig in diesem angeordnet ist.

Aufgrund dieser Ausbildung kann der Dynamikumfang durch die Kombination der mit unterschiedlicher Belichtungszeit aufgenommenen Bilder erheblich erweitert werden, ohne dass dabei infolge bewegter Objekte ein Ortsversatz auftritt. Nachdem die zwischen einem jeweiligen Aufnahmebeginn und einem jeweiligen Aufnahmeende liegenden Zeitmittelpunkte der miteinander zu kombinierenden Bilder zumindest im Wesentlichen zusammenfallen, ist ein solcher Ortsversatz insbesondere auch bei schneller bewegten Objekten praktisch ausgeschlossen. Der erfindungsgemäß erreichte Dynamikumfang der digitalen Laufbildkamera ist nicht nur vergleichbar mit dem einer Laufbildkamera zur Belichtung eines Filmes, er kann den Dynamikumfang einer solchen Filmkamera sogar übertreffen. Die digitale Laufbildkamera kann nunmehr insbesondere auch mit einem mechanischen Verschluss wie beispielsweise einer Spiegelumlaufblende oder dergleichen versehen sein. Die Kombination der Bilder unterschiedlicher Belichtungszeit ist nunmehr auch ohne die bisher erforderliche aufwändige und nicht immer zuverlässige Bewegungsschätzung möglich. Eine solche Bewegungsschätzung kann allerdings als Offline-Verfahren angewandt werden, um den Bildern kürzerer Belichtungszeit zusätzliche Bewegungsunschärfe zu geben.

Die optoelektronische Sensoreinrichtung umfasst bevorzugt integrierende Sensorelemente. Bei diesen integrierenden Sensorelementen kann es sich insbesondere um solche Sensorelemente handeln, deren Empfangssignal abhängig vom Integral der auf das betreffende Bildelement bzw. Pixel auftreffenden Lichtmenge ist. Ein solches integrierendes Sensorelement kann zudem insbesondere eine nahezu lineare Kennlinie besitzen, was bedeutet, dass das Empfangssignal in etwa proportional zur Lichtmenge und bei konstanter Helligkeit entsprechend proportional zum Produkt aus Belichtungszeit und Helligkeit ist. Schwankende Beleuchtungshelligkeiten wie sie zum Beispiel bei Leuchtstofflampen auftreten, spielen also zumindest dann keine Rolle mehr, wenn man als Belichtungszeit ein ganzzahliges Vielfaches der Periode der Helligkeitsschwankung wählt. Ein solcher integrierender Sensortyp lässt sich auch problemlos in eine mit einem mechanischen Verschluss oder "Shutter" versehene digitale Kamera integrieren.

Gemäß einer bevorzugten praktischen Ausführungsform der erimdungsgemäßen Laufbildkamera umfasst die optoelektronische Sensoreinrichtung wenigstens einen CMOS-Sensor, der entsprechende integrierende Eigenschaften besitzt.

Die erfindungsgemäße Laufbildkamera, die insbesondere bei einem Einsatz einer optoelektronischen Sensoreinrichtung mit integrierenden Sensorelementen von Vorteil ist, ist **dadurch gekennzeichnet, dass** wenigstens ein erstes Bild relativ längerer Belichtungszeit und wenigstens ein zweites Bild relativ kürzerer Belichtungszeit mit zumindest im Wesentlichen zusammenfallenden Zeitmittelpunkten miteinander kombiniert werden, wobei das erste Bild relativ längerer Belichtungszeit mittels der Steuereinrichtung zumindest aus zwei zeitlich nacheinander aufgenommenen Teilbildern zusammengesetzt wird, nämlich aus einem ersten Teilbild (im Folgenden: " vorangehendes Teilbild") und aus einem nach dem ersten Teilbild aufgenommenen Teilbild (im Folgenden: " nachfolgendes Teilbild"), wobei der Zeitmittelpunkt des ersten Bildes durch den zwischen dem Aufnahmebeginn des vorangehenden Teilbildes und dem Aufnahmeende des nachfolgenden Teilbildes liegenden Zeitmittelpunkt definiert ist.

Zweckmäßigerweise wird das erste Bild dadurch zusammengesetzt, dass die Empfangssignale der einander entsprechenden Sensorelemente der beiden das erste Bild relativ längerer Belichtungszeit definierenden Teilbilder mittels der Steuereinrichtung addiert werden.

Von Vorteil ist insbesondere auch, wenn der Aufnahmebeginn des zweiten Bildes relativ kürzerer Belichtungszeit mit dem Aufnahmeende des vorangehenden Teilbildes des zusammengesetzten ersten Bildes relativ längerer Belichtungszeit definierenden Teilbilder zusammenfällt.

Vorzugsweise wird die Sensoreinrichtung zwischen den Aufnahmen der verschiedenen Bilder und Teilbilder zurückgesetzt. Die relativ längere Belichtung wird hier also unterbrochen. Das erste Bild relativ längerer Belichtungszeit wird dazu aus den beiden zeitlich nacheinander aufgenommenen Bildern relativ längerer Belichtungszeit zusammengesetzt. Indem die Sensoreinrichtung zwischen deren Aufnahmen zurückgesetzt wird, wird die vom vorangehenden Bild der beiden zeitlich nacheinander aufgenommenen Bilder erhaltene Information gelöscht. Sie geht also nicht in das anschließend aufgenommene nachfolgende Bild relativ längerer Belichtungszeit ein.

Bevorzugt wird die optoelektronische Sensoreinrichtung zum Zeitpunkt des Aufnahmeendes des vorangehenden Teilbildes der beiden das erste Bild relativ längerer Belichtungszeit definierenden Teilbilder oder zum Zeitpunkt des Aufnahmebeginns des zweiten Bildes relativ kürzerer Belichtungszeit zurückgesetzt.

Dabei kann die optoelektronische Sensoreinrichtung zum Zeitpunkt des Aufnahmeendes des zweiten Bildes relativ kürzerer Belichtungszeit ein weiteres Mal zurückgesetzt werden. In diesem Fall fällt der Zeitpunkt des Aufnahmebeginns des nachfolgenden Teilbildes der beiden das erste Bild relativ längerer Belichtungszeit definierenden Teilbilder vorteilhafterweise mit dem Zeitpunkt des Aufnahmeendes des zweiten Bildes relativ kürzerer Belichtungszeit zusammen.

Gemäß einer alternativen zweckmäßigen Ausführungsform kann der Zeitpunkt des Aufnahmebeginns des nachfolgenden Teilbildes der beiden das erste Bild relativ längerer Belichtungszeit definierenden Teilbilder jedoch auch mit dem Zeitpunkt des Aufnahmeendes des vorangehenden Teilbildes des zusammengesetzten ersten Bildes oder mit dem Zeitpunkt des Aufnahmebeginns des zweiten Bildes relativ kürzerer Belichtungszeit zusammenfallen. In diesem Fall wird die optoelektronische Sensoreinrichtung zum Zeitpunkt des Aufnahmeendes des zweiten Bildes relativ kürzerer Belichtungszeit also nicht zurückgesetzt.

Gemäß einer bevorzugten praktischen Ausführungsform der erfindungsgemäßen Laufbildkamera sind zur Erzeugung der miteinander zu kombinierenden Bilder unterschiedlicher Belichtungszeit die Sensorelemente der optoelektronischen Sensoreinrichtung mittels der Steuereinrichtung so ansteuerbar, dass von einem jeweiligen Sensorelement zeitlich nacheinander wenigstens drei Empfangssignale ausgelesen werden, wobei das erste Empfangssignal zur Bildung des vorangehenden Teilbildes der beiden das erste Bild relativ längerer Belichtungszeit definierenden Teilbilder, das zweite Empfangssignal zur Bildung des zweiten Bildes relativ kürzerer Belichtungszeit und das dritte Empfangssignal zur Bildung des nachfolgenden Teilbildes der beiden das erste Bild relativ längerer Belichtungszeit definierenden Teilbilder herangezogen werden, und wobei das Sensorelement vorzugsweise zum Zeitpunkt des Aufnahmeendes des vorangehenden Teilbildes der beiden das erste Bild relativ längerer Belichtungszeit definierenden Teilbilder oder zum Zeitpunkt des Aufnahmebeginns des zweiten Bildes relativ kürzerer Belichtungszeit zurückgesetzt wird.

Dabei kann das Sensorelement zum Zeitpunkt des Aufnahmeendes des zweiten Bildes relativ kürzerer Belichtungszeit ein weiteres Mal zurückgesetzt werden, um dadurch den Zeitpunkt des Aufnahmebeginns des nachfolgenden Teilbildes des ersten Bildes relativ längerer Belichtungszeit zu definieren.

Bei einer alternativen zweckmäßigen Ausführungsform fällt der Zeitpunkt des Aufnahmebeginns des nachfolgenden Teilbildes der beiden das erste Bild relativ längerer Belichtungszeit definierenden Teilbilder mit dem Zeitpunkt des Aufnahmebeginns des zweiten Bildes relativ kürzerer Belichtungszeit zusammen. In diesem Fall wird das Sensorelement zum Zeitpunkt des Aufnahmeendes des zweiten Bildes relativ kürzerer Belichtungszeit also nicht zurückgesetzt.

Die mit unterschiedlicher Belichtungszeit aufzunehmenden Bilder können auch ohne zwischenzeitliches Rücksetzen der Sensoreinrichtung bzw. der einzelnen Sensorelemente aufgenommen werden. Während der fortlaufenden Belichtung bzw. Signalintegration werden für das betreffende Sensorelement in diesem Fall zunächst Zwischenwerte und schließlich ein Endwert ausgelesen, ohne das bislang jeweils erzeugte Empfangssignal zurückzusetzen. Die jeweiligen Integrationswerte für die unterschliedlichen Belichtungszeiten werden für einen jeweiligen Bildpunkt dann rechnerisch aus den genannten Zwischenwerten und dem Endwert ermittelt.

Wie bereits erwähnt, kann die erfindungsgemäße Laufbildkamera vorteilhafterweise mit einem der optoelektronischen Sensoreinrichtung vorgeschalteten mechanischen Verschluss oder "Shutter" versehen sein.

Dabei kann als mechanischer Verschluss insbesondere eine Spiegelumlaufblende vorgesehen sein. Eine solche Spiegelumlaufblende kann bevorzugt dazu dienen, auftreffendes Licht abwechselnd zur optoelektronischen Sensoreinrichtung durchzulassen oder in einen optischen Sucher zu spiegeln.

Das genannte Kombinieren der mit unterschiedlicher Belichtungszeit aufgenommenen Bilder erfolgt grundsätzlich derart, dass für jeden Bildpunkt bzw. für jedes Sensorelement der Sensoreinrichtung derjenige Empfangssignalwert der mit unterschiedlicher Belichtungszeit aufgenommenen Bilder identifiziert werden, der noch unterhalb eines Sättigungsschwellwerts des betreffenden Sensorelements liegt und dabei jedoch den größten Wert besitzt. Hierdurch wird für jedes Sensorelement letztlich derjenige Signalwert mit dem größten verwertbaren Signal/Rauschverhältnis ausgewählt. Eine derartige Auswahl kann beispielsweise mittels einer Vergleichsschaltung durchgeführt werden, die Teil der genannten Steuereinrichtung sein kann. Die derartig ausgewählten Signalwerte der verschiedenen Bilder werden dann zu einem Ergebnisbild zusammengesetzt, wobei vorzugsweise eine gegenseitige Normierung durchgeführt wird, um die unterschiedlichen Belichtungszeiten der aufgenommenen Bilder zu berücksichtigen.

Sollen also beispielsweise zwei Bilder unterschiedlicher Belichtungszeit miteinander kombiniert werden, so kann man das Bild relativ kürzerer Belichtungszeit innerhalb und vorzugsweise in der Mitte der Belichtungszeit des Bildes relativ längerer Belichtungszeit aufnehmen. Dies wird insbesondere dadurch erreicht, dass man die lange Belichtung insbesondere in der Mitte teilt. Dadurch, dass das Bild relativ kürzerer Belichtungszeit innerhalb des Bildes relativ längerer Belichtungszeit aufgenommen wird, ist dafür gesorgt, dass deren Zeitmittelpunkte zumindest im Wesentlichen zusammenfallen. Bevorzugt ist dabei das Bild relativ kürzerer Belichtungszeit mittig in dem Bild relativ größerer Belichtungszeit angeordnet. Wie bereits erwähnt, ist dies jedoch nicht in jedem Fall zwingend. Häufig genügt es, wenn das Bild relativ kürzerer Belichtungszeit innerhalb des Zeitraumes zwischen dem erstmaligen Aufnahmebeginn und dem endgültigen Aufnahmeende des Bildes relativ längerer Belichtungszeit liegt, d.h. die Zeitmittelpunkte dieser Bilder im Wesentlichen zusammenfallen.

Man kann also beispielsweise drei Bilder aus dem Sensor auslesen, und zwar erstens ein Bild bzw. Bildabschnitt mit relativ langer Belichtung, zweitens ein Bild mit relativ kurzer Belichtung und drittens wieder ein Bild bzw. Bildabschnitt mit relativ langer Belichtung. Das erste und das dritte Bild, oder auch alle drei Bilder, können elektronisch addiert werden und bilden das Bild mit der langen Belichtungszeit. Dieses kann dann mit dem zweiten Bild kombiniert werden, indem die Stellen, die übersteuert sind, durch die entsprechende Stelle aus dem zweiten Bild ersetzt werden. Die dunklen Bildbereiche können aus dem Bild relativ längerer Belichtungszeit genommen werden. Da die Mitten der Beleuchtungszeiträume zumindest im Wesentlichen zusammenfallen, tritt der örtliche Versatz bei bewegten Objekten praktisch nicht auf. Nur die Bewegungsunschärfe der beiden Bilder ist unterschiedlich, was jedoch bei weitem nicht so störend wahrgenommen wird wie ein örtlicher Versatz.

Durch eine Aufteilung des langen Belichtungszeitraums in zwei Bilder, die separat ausgelesen werden, geht das Grundrauschen des Sensors zwar zweimal ein. Dem steht jedoch gegenüber, dass zur Sättigung des Sensors bei der kürzeren Belichtungszeit eine wesentlich höhere Lichtmenge erforderlich ist, was zu einem erheblich größeren Dynamikumfang führt, der den Dynamikumfang bei Film-Laufbildkameras sogar übertreffen kann.

Die Bilder unterschiedlicher Belichtungszeit können nunmehr ohne die bisher erforderliche sehr aufwändige und nicht immer zuverlässige Bewegungsschätzung miteinander kombiniert werden. Die Bewegungsschätzung kann aber als Offline-Verfahren angewandt werden, um den Bildern mit der kurzen Belichtungszeit zusätzliche Bewegungsunschärfe zu geben.

Die Erfindung wird im Folgenden anhand von Ausführungsbeispielen unter Bezugnahme auf die Zeichnung näher erläutert; in dieser zeigen:
- Figur 1: eine schematische Darstellung einer beispielhaften Ausführungsform einer digitalen Laufbildkamera,
- Figur 2: eine beispielhafte flächige Anordnung von Sensorelementen der elektrooptischen Sensoreinrichtung der Laufbildkamera,
- Figur 3: ein Zeitdiagramm zu einer beispielhaften Ansteuerung eines jeweiligen Sensorelements der optoelektrischen Sensoreinrichtung und
- Figur 4: ein Zeitdiagramm zu einer anderen beispielhaften Ansteuerung eines jeweiligen Sensorelements der optoelektrischen Sensoreinrichtung.

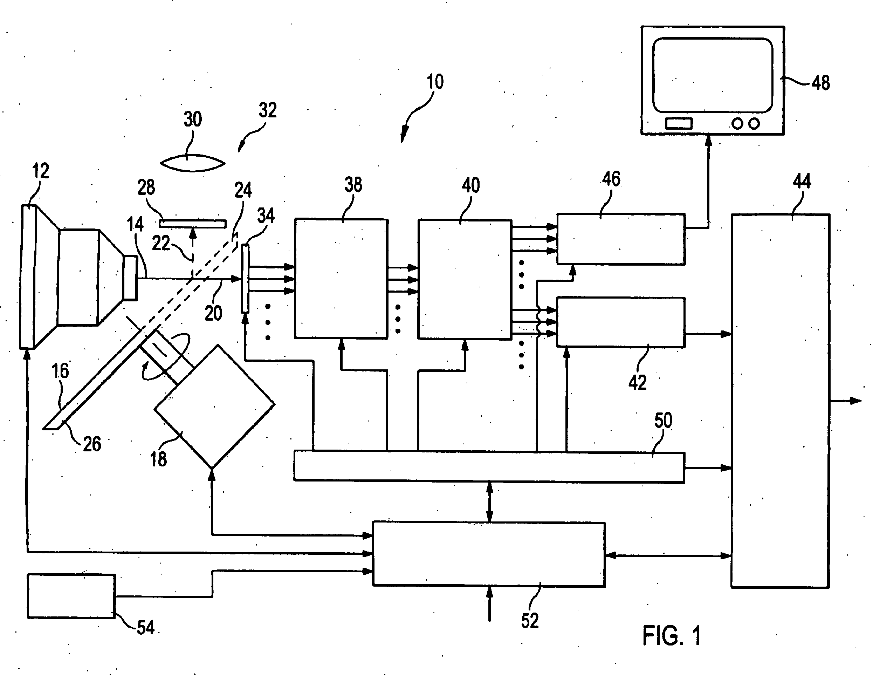

Figur 1 zeigt in schematischer Darstellung eine beispielhafte Ausführungsform einer digitalen Laufbildkamera 10.

Die Laufbildkamera 10 umfasst eine Aufnahmeoptik 12, die das aktuell aufzuzeichnende Laufbild entlang eines Empfangsstrahlengangs 14 abbildet. Mittels eines mechanischen Verschlusses oder "Shutters", hier einer Spiegelumlaufblende 16, die durch eine Antriebseinheit 18 zu einer Rotationsbewegung antreibbar ist, wird das entlang des Empfangsstrahlengangs 14 einfallende Licht abwechselnd in Richtung eines Aufnahmestrahlengangs 20 durchgelassen oder in Richtung eines Sucherstrahlengangs 22 umgelenkt. Zu diesem Zweck besitzt die Spiegelumlaufblende 16 eine Durchlassöffnung 24 und einen verspiegelten Ablenkbereich 26.

Befindet sich der Ablenkbereich 26 im Empfangsstrahlengang 14, so wird das von der Aufnahmeoptik 12 erfasste Bild auf eine mattierte Glasscheibe 28 abgebildet, so dass auf dieser ein reales Bild entsteht, das mittels einer Sucheroptik 30 vom Kameramann beobachtet werden kann, wodurch ein optischer Sucher 32 gebildet ist.

Dagegen wird zu den Zeitpunkten, zu denen sich, wie in Fig. 1 gezeigt, die Durchlassöffnung 24 im Empfangsstrahlengang 14 befindet, das aufzunehmende Laufbild von der Aufnahmeoptik 12 ohne weitere Umlenkung auf eine optoelektronische Sensorenrichtung 34 abgebildet, die sich bezüglich der Aufnahmeoptik 12 in der gleichen optischen Lage wie die Glasscheibe 28 befindet.

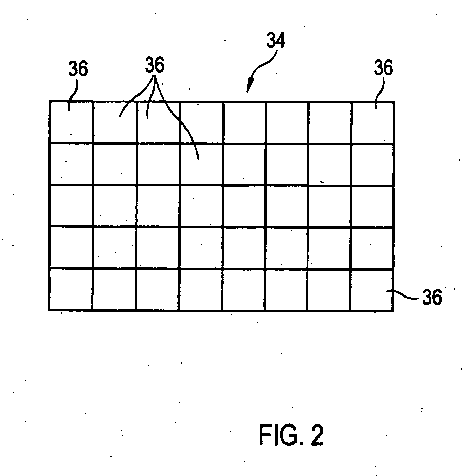

Die optoelektronische Sensoreinrichtung 34 umfasst in einer matrixförmigen flächigen Anordnung eine Vielzahl von Sensorelementen 36 (vgl. Figur 2), die infolge der Lichtbeaufschlagung durch die Durchlassöffnung 24 der Spiegelumlaufblende 16 hindurch ein jeweiliges Empfangssignal erzeugen können, das der Lichtintensität und der Belichtungszeit entspricht. Dabei kann die optoelektronische Sensoreinrichtung 34 beispielsweise eine Anordnung von 1920 x 1080 oder 2880 x 2160 derartigen Sensorelementen 36 aufweisen.

Die von der Sensoreinrichtung 34 erzeugten Empfangssignale werden einer Verstärkungseinrichtung 38 zugeführt, die eine entsprechende Anzahl von elektronischen Verstärkern aufweist. Die derart verstärkten Empfangssignale werden in einer nachgeschalteten Digitalisierungseinrichtung 40 durch eine entsprechende Anzahl von Analog/ Digital-Wandlern digitalisiert.

Die Digitalisierungseinrichtung 40 ist über eine Datenschnittstelle 42 mit einer Speichereinrichtung 44 verbunden, die die aufgenommenen und digitalisierten und gegebenenfalls entsprechend verarbeiteten Empfangssignale beispielsweise auf einer magnetischen Festplatte in Echtzeit aufzeichnet.

Zudem können über eine weitere mit der Digitalisierungseinrichtung 40 verbundene Datenschnittstelle 46 die Empfangssignale einem Anzeigemonitor 48 zugeführt werden, um auf diesen, gegebenenfalls auch an einem von der Kamera entfernten Ort, eine gleichzeitige Beobachtung der Laufbilder zu ermöglichen.

Der Datenfluss von der Sensoreinrichtung 34 gegebenenfalls über die Verstärkungseinrichtung 38 und über die Digitalisierungseinrichtung 40 an die Datenschnittstelle 42 und die Speichereinrichtung 44 einerseits und gegebenenfalls an die Datenschnittstelle 46 und den Anzeigemonitor 48 andererseits kann durch eine elektronische Steuereinrichtung 50 gesteuert sein, die dazu mit den genannten Komponenten 34, 38, 40, 42 und 46 verbunden ist. Diese elektronische Steuereinrichtung 50 kann insbesondere auch das Auslesen der Empfangssignale der einzelnen Sensorelemente 36 der Sensoreinrichtung 34 steuern.

Zudem ist eine Kamerasteuereinrichtung 52 vorgesehen, die mit der Aufnahmeoptik 12, mit der Antriebseinheit 18 für die rotierende Spiegelblende 16, mit der elektronischen Steuereinrichtung 50, mit der Speichereinrichtung 44 und ferner mit einem Kamerasensor 54 verbunden sein kann, der beispielsweise die Helligkeit der aufzunehmenden Szene oder einzelner Bereiche hiervon detektiert. Die Kamerasteuereinrichtung 52 synchronisiert den Ablauf der digitalen Laufbildaufnahme mit der Steuerung oder Signalverarbeitung der weiteren Kamerakomponenten, und sie ermöglicht über eine in der vorliegenden Figur 1 nicht gezeigte Anwenderschnittstelle die Eingabe von Einstellparametern durch den Kameramann.

Die dargestellte digitale Laufbildkamera 10 ermöglicht das Aufnehmen und Abspeichern von Bildsignaldaten in einem digitalen Format und gleichzeitig eine direkte optische Beobachtung der aufgenommenen Szenen über den optischen Sucher 32 sowie gegebenenfalls eine elektrooptische Kontrollbeobachtung der aufgenommenen Daten an dem Anzeigemonitor 48.

Bei dem in der Figur 1 gezeigten Ausführungsbeispiel ist die optoelektrische Sensoreinrichtung 34 durch einen integrierende Sensorelemente umfassenden CMOS-Sensor gebildet. Die integrierenden Sensorelemente können individuell angesteuert werden, um zu einem beliebigen Zeitpunkt ein Rücksetzen oder ein nachfolgendes Auslesen der fotoelektrischen Ladung bzw. eines entsprechenden Spannungssignals zu bewirken.

Bei einem derartigen CMOS-Sensor wird das ein Sensorelement beaufschlagende Licht in eine fotoelektrischen Ladung und dadurch letztlich in ein Spannungssignal umgesetzt, dessen Wert während der Dauer der Lichtbeaufschlagung zunimmt. Ein einzelnes Sensorelement kann kurzgeschlossen und somit rückgesetzt werden, um den Spannungswert auf Null zu setzen und somit die Belichtungsdauer zu einem definierten Zeitpunkt beginnen zu lassen. Ebenso kann das Auslesen eines solchen integrierenden Sensorelements 36 zu einem beliebigen, definierten Zeitpunkt erfolgen, um dadurch ein Empfangssignal zu erhalten, das einer vorgegebenen Belichtungsdauer entspricht. Da sowohl der Anfangszeitpunkt als auch der Endzeitpunkt der Belichtungsdauer beliebig eingestellt werden können, kann letztlich auch die Frequenz, mit der die Bilddatensätze aller Sensorelemente 36 gemeinsam erzeugt werden, variiert werden. Der CMOS-Sensor ermöglicht somit unter anderem eine Variation der Bildaufnahmefrequenz.

Bei der gezeigten optoelektrischen Sensoreinrichtung 34 erfolgt die Steuerung der Belichtungszeit und gegebenenfalls der Bildaufnahmefrequenz elektronisch, wobei die Steuereinrichtung 50 über die Kamerasteuereinrichtung 52 auch die Antriebseinheit 18 der Spiegelumlaufblende 16 entsprechend ansteuert, um die Abdunklung bzw. Lichtbeaufschlagung der Sensoreinrichtung 34 über den Ablenkbereich 26 und die Durchlassöffnung 24 der Spiegelumlaufblende 16 zu steuern oder zu beeinflussen.

Fig. 2 zeigt schematisch eine mögliche matrixförmige flächige Unterteilung der lichtempfindlichen Vorderseite einer optoelektronischen Sensoreinrichtung 34 in mehrere Sensorelemente 36, wobei zur vereinfachten Darstellung lediglich eine geringe Anzahl solcher Sensorelemente 36 dargestellt ist.

Bevorzugt werden die Empfangssignale dieser Sensorelemente 36 zumindest gruppenweise, vorzugsweise insgesamt parallel ausgelesen. Grundsätzlich ist jedoch zumindest teilweise auch ein sequenzielles Auslesen denkbar. Mit einem jeweiligen Rücksetzen der Sensorelemente 36 werden die bislang an diesen fotoelektrisch erzeugten Spannungswerte wieder auf Null gesetzt. Nach dem Rücksetzen eines jeweiligen Sensorelements 36 wird, sofern eine Lichtbeaufschlagung vorliegt, unmittelbar wieder mit der Erzeugung und Ansammlung fotoelektrischer Ladung begonnen. Sowohl das Auslesen als auch das Rücksetzen dieser Sensorelemente 36 kann über die elektronische Steuereinrichtung 50 erfolgen.

Im vorliegenden Fall ist die elektronische Steuereinrichtung 50 der digitalen Laufbildkamera 10 dergestalt ausgebildet, dass wenigstens ein erstes Bild relativ längerer Belichtungszeit und wenigstens ein zweites Bild relativ kürzerer Belichtungszeit überlappend mit zumindest im Wesentlichen zusammenfallenden Zeitmittelpunkten aufgenommen und miteinander kombiniert werden. Unter zusammenfallenden Zeitmittelpunkten ist hier allgemein zu verstehen, dass der Aufnahmezeitraum des zweiten Bildes relativ kürzerer Belichtungszeit innerhalb des Bereiches zwischen dem Aufnahmebeginn des ersten Bildes relativ längerer Belichtungszeit und dem Aufnahmeende des ersten Bildes relativ längerer Belichtungszeit liegt, wobei der Aufnahmezeitraum des zweiten Bildes in diesem Bereich relativ längerer Belichtung vorzugsweise zentriert ist.

Bevorzugt wird das erste Bild relativ längerer Belichtungszeit mittels der Steuereinrichtung 50 aus zwei zeitlich nacheinander aufgenommenen Teilbildern zusammengesetzt wird, zwischen deren Aufnahmen die optoelektronische Sensoreinrichtung 34 zurückgesetzt wird, wobei der Zeitmittelpunkt des ersten Bildes durch den Zeitmittelpunkt definiert ist, der zwischen dem Aufnahmebeginn des vorangehenden Teilbildes und dem Aufnahmeende des nachfolgenden Teilbildes des ersten Bildes relativ längerer Belichtungszeit liegt.

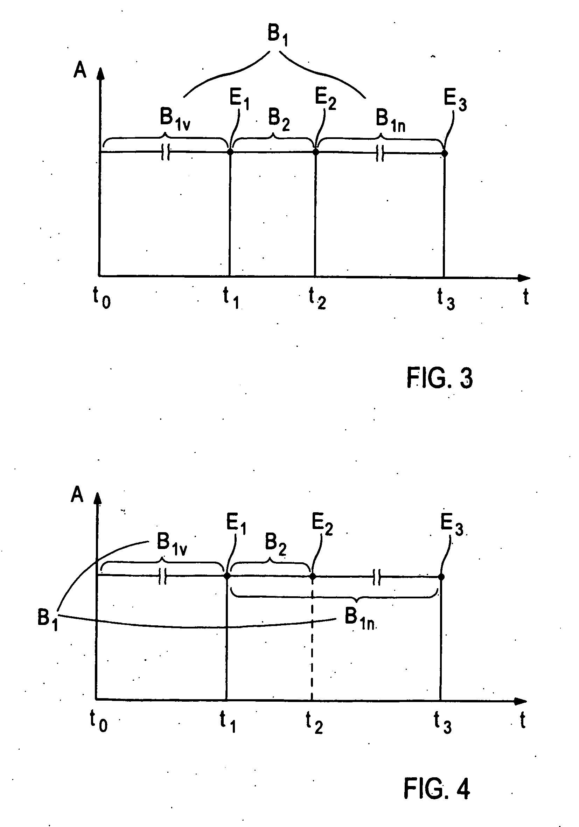

In der Figur 3 ist ein Zeitdiagramm zu einer beispielhaften Ansteuerung eines jeweiligen Sensorelements 36 der optoelektrischen Sensoreinrichtung 34 gezeigt. Dabei ist der Ansteuerungszustand A eines betreffenden Sensorelements 36 über der Zeit t dargestellt.

Danach sind zur Erzeugung der beiden miteinander zu kombinierenden Bilder Bi, B₂ unterschiedlicher Belichtungszeit die Sensorelemente 36 der optoelektronischen Sensoreinrichtung 34 mittels der elektronischen Steuereinrichtung 50 so ansteuerbar, dass von einem jeweiligen Sensorelement 36 zeitlich nacheinander wenigstens drei Empfangssignale E₁-E₃ ausgelesen werden, und zwar zu den Zeitpunkten t₁, t₂ bzw. t₃. Aus ein und demselben Sensorelement 36 wird also zum Zeitpunkt t₁ ein erstes Empfangssignal E₁, zum Zeitpunkt t₂ ein zweites Empfangssignal E₂ und zum Zeitpunkt t₃ ein drittes Empfangssignal E₃ ausgelesen.

Dabei wird das erste Empfangssignal E₁ zur Bildung des sogenannten vorangehenden Teilbildes B₁ᵥ der beiden das erste Bild B₁ relativ längerer Belichtungszeit definierenden Teilbilder B₁ᵥ, B₁ₙ, das zweite Empfangssignal E₂ zur Bildung des zweiten Bildes B₂ relativ kürzerer Belichtungszeit und das dritte Empfangssignal E₃ zur Bildung des sogenannten nachfolgenden Teilbildes B₁ₙ des ersten Bildes B₁ relativ längerer Belichtungszeit herangezogen. Das Sensorelement 36 wird zumindest zum Zeitpunkt t₁ des Aufnahmeendes des vorangehenden Teilbildes B₁ᵥ des ersten Bild B₁ relativ längerer Belichtungszeit zurückgesetzt, der mit dem Zeitpunkt des Aufnahmebeginns des zweiten Bildes B₂ relativ kürzerer Belichtungszeit zusammenfällt.

Im vorliegenden Fall wird das Sensorelement 36 zum Zeitpunkt t₂ des Aufnahmeendes des zweiten Bildes B₂ relativ kürzerer Belichtungszeit ein weiteres Mal zurückgesetzt. Demzufolge entspricht hier der Zeitpunkt t₂ auch dem Aufnahmebeginn des nachfolgenden Teilbildes B₁ₙ des ersten Bildes B₁ relativ längerer Belichtungszeit. Die Belichtungszeiten der beiden Teilbilder B₁ᵥ und B₁ₙ, die gleich oder auch unterschiedlich sein können, sind vorzugsweise jeweils länger als die Belichtungszeit des zweiten Bildes B₂.

Die Empfangssignale E₁, E₃ der beiden das erste Bild B₁ relativ längerer Belichtungszeit definierenden zeitlich nacheinander aufgenommenen Teilbilder B₁ᵥ, B₁ₙ werden mittels der elektronischen Steuereinrichtung 50 addiert. Das dadurch erhaltene erste Bild B₁ relativ längerer Belichtungszeit wird dann mittels der Steuereinrichtung 50 mit dem zweiten Bild B₂ relativ kürzerer Belichtungszeit kombiniert. Dabei können beispielsweise alle dunklen Bildbereiche aus dem Bild B₁ relativ längerer Belichtungszeit genommen und die Bildbereiche, bei denen das Bild B₁ relativ längerer Belichtungszeit übersteuert ist, aus dem anderen Bild B₂ relativ kürzerer Belichtungszeit übernommen werden.

Je größer der Unterschied zwischen der Belichtungszeit des ersten Bildes B₁ relativ längerer Belichtungszeit und der Belichtungszeit des zweiten Bildes B₂ relativ kürzerer Belichtungszeit ist, desto größer wird der Dynamikbereich. So kann die Belichtungszeit des ersten Bildes B₁ beispielsweise zehnmal größer als die Belichtungszeit des zweiten Bildes B₂ sein. Grundsätzlich sind jedoch auch andere Zeitverhältnisse denkbar.

Bei dem Ausführungsbeispiel gemäß Figur 3 fällt der Aufnahmebeginn des zweiten Bildes B₂ relativ kürzerer Belichtungszeit mit dem Aufnahmeende t₁ des vorangehenden Teilbildes B₁ᵥ der beiden das erste Bild B₁ definierenden Teilbilder B₁ᵥ, B₁ₙ zusammen. Die optoelektronische Sensoreinrichtung 34 wird zu dem Zeitpunkt t₁ des Aufnahmeendes des vorangehenden Teilbildes B₁ᵥ zurückgesetzt, so das zu diesem Zeitpunkt die Aufnahme des zweiten Bildes B₂ relativ kürzerer Belichtungszeit beginnt. Zum Zeitpunkt t₂ des Aufnahmeendes dieses zweiten Bildes B₂ relativ kürzerer Belichtungszeit wird die optoelektronische Sensoreinrichtung 34 bzw. das betreffende Sensorelement im vorliegenden Fall ein weiteres Mal zurückgesetzt. Entsprechend fällt der Zeitpunkt des Aufnahmebeginns des nachfolgenden Teilbildes B₁ₙ des zusammengesetzten ersten Bild B₁ relativ längerer Belichtungszeit mit dem Zeitpunkt t₂ des Aufnahmeendes des zweiten Bildes B₂ relativ kürzerer Belichtungszeit zusammen.

Dagegen wird ein jeweiliges Sensorelement 36 gemäß dem in der Figur 4 wiedergegebenen Zeitdiagramm so angesteuert, dass der Zeitpunkt des Aufnahmebeginns des nachfolgenden Teilbildes B₁ₙ der beiden das erste Bild B₁ relativ längerer Belichtungszeit definierenden Teilbilder B₁ᵥ, B₁ₙ mit dem Zeitpunkt t₁ des Aufnahmeendes des vorangehenden Teilbildes B₁ᵥ des zusammengesetzten ersten Bildes B₁ relativ längerer Belichtungszeit zusammenfällt, der gleichzeitig dem Zeitpunkt des Aufnahmebeginns des zweiten Bildes B₂ relativ kürzerer Belichtungszeit entspricht. Somit entspricht das erste Bild B₁ relativ längerer Belichtungszeit den beiden Teilbildern B₁ᵥ, B₁ₙ und zusätzlich dem zweiten Bild B₂ relativ kürzerer Belichtungszeit.

Zu den Figuren 3 und 4 ist noch anzumerken, dass die Empfangssignale E1 bis E3 auch ohne zwischenzeitliches Rücksetzen der einzelnen Sensorelemente 36 ausgelesen werden können, um die verschiedenen Bilder mit unterschiedlicher Belichtungszeit aufzunehmen. Vorzugsweise werden zumindest einige der Empfangssignale E 1 bis E3 miteinander verrechnet. Beispielsweise kann das zweite Bild B₂ relativ kürzerer Belichtungszeit durch Subtraktion der Empfangssignale E2 minus der Empfangssignale E1 berechnet werden, während sich das erste Bild B₁ relativ längerer Belichtungszeit entweder aus den Empfangssignalen E3 ergibt (d.h. ohne Ermittlung von Teilbildern B₁ᵥ, B₁ₙ) oder aus den Empfangssignalen E3 minus der Empfangssignale E2 plus der Empfangssignale E1 (d.h. Subtraktion des zweiten Bilds B₂ relativ kürzerer Belichtungszeit).

### Bezugszeichenliste

- 10: digitale Laufbildkamera
- 12: Aufnahmeooptik
- 14: Empfangsstrahlengang
- 16: Spiegelumlaufblende
- 18: Antriebseinheit
- 20: Aufnahmestrahlengang
- 22: Sucherstrahlengang
- 24: Durchlassöffnung
- 26: verspiegelter Ablenkbereich
- 28: mattierte Glasscheibe
- 30: Sucheroptik
- 32: optischer Sucher
- 34: optoelektrische Sensoreinrichtung
- 36: Sensorelement
- 38: Verstärkungseinrichtung
- 40: Digitalisierungseinrichtung
- 42: Datenschnittstelle
- 44: Speichereinrichtung
- 46: Datenschnittstelle
- 48: Anzeigemonitor
- 50: elektronische Steuereinrichtung
- 52: Kamerasteuereinrichtung
- 54: Kamerasensor

- B₁: erstes Bild relativ längerer Belichtungszeit
- B₁ᵥ: vorangehendes Teilbild des ersten Bildes B₁
- B₁ₙ: nachfolgendes Teilbild des ersten Bildes B₁
- B₂: zweites Bild relativ kürzerer Belichtungszeit
- E₁: erstes Empfangssignal
- E₂: zweites Empfangssignal
- E₃: drittes Empfangssignal

## Patentansprüche

1. Digitale Laufbildkamera (10) zum Aufnehmen von Laufbildern, mit einer optoelektronischen Sensoreinrichtung (34), die eine Vielzahl von Sensorelementen (36) zur Erzeugung von Empfangssignalen in Abhängigkeit von der Belichtungszeit aufweist, einer Digitalisierungseinrichtung (40) zur Digitalisierung der Empfangssignale und einer elektronischen Steuereinrichtung (50) zur Steuerung der Belichtungszeit und des Auslesens der Empfangssignale sowie zur Auswertung dieser Empfangssignale, wobei mittels der Steuereinrichtung (50) mehrere mit unterschiedlicher Belichtungszeit aufgenommene Bilder (B₁, B₂) miteinander kombiniert werden,
**dadurch gekennzeichnet,**
**dass** die zwischen einem jeweiligen Aufnahmebeginn und einem jeweiligen Aufnahmeende liegenden Zeitmittelpunkte der miteinander zu kombinierenden Bilder (B₁, B₂) zumindest im Wesentlichen zusammenfallen, wobei wenigstens ein erstes Bild (B₁) relativ längerer Belichtungszeit und wenigstens ein zweites Bild (B₂) relativ kürzerer Belichtungszeit mit zumindest im Wesentlichen zusammenfallenden Zeitmittelpunkten miteinander kombiniert werden, wobei das erste Bild (B₁) relativ längerer Belichtungszeit mittels der Steuereinrichtung (50) zumindest aus zwei zeitlich nacheinander aufgenommenen Teilbildern (B₁ᵥ, B₁ₙ) zusammengesetzt wird, nämlich aus einem vorangehenden Teilbild (B₁ᵥ) und einem nachfolgenden Teilbild (B₁ₙ), und wobei der Zeitmittelpunkt des ersten Bildes (B₁) durch den zwischen dem Aufnahmebeginn des vorangehenden Teilbildes (B₁ᵥ) und dem Aufnahmeende des nachfolgenden Teilbildes (B₁ₙ) liegenden Zeitmittelpunkt definiert ist.

2. Laufbildkamera nach Anspruch 1,
**dadurch gekennzeichnet,**
**dass** die optoelektronische Sensoreinrichtung (50) integrierende Sensorelemente (36) umfasst.

3. Laufbildkamera nach Anspruch 1 oder 2,
**dadurch gekennzeichnet,**
**dass** die optoelektronische Sensoreinrichtung (34) wenigstens einen CMOS-Sensor umfasst.

4. Laufbildkamera nach einem der vorhergehenden Ansprüche,
**dadurch gekennzeichnet,**
**dass** das erste Bild (B₁) relativ längerer Belichtungszeit den beiden Teilbildern (B₁ᵥ, B₁ₙ) und zusätzlich dem zweiten Bild (B₂) relativ kürzerer Belichtungszeit entspricht.

5. Laufbildkamera nach einem der vorhergehenden Ansprüche,
**dadurch gekennzeichnet,**
**dass** die Empfangssignale (E₁, E₃) der beiden das erste Bild (B₁) relativ längerer Belichtungszeit definierenden Teilbilder (B₁ᵥ, B₁ₙ) mittels der Steuereinrichtung (50) addiert werden.

6. Laufbildkamera nach einem der vorhergehenden Ansprüche,
**dadurch gekennzeichnet,**
**dass** der Zeitpunkt des Aufnahmebeginns des zweiten Bildes (B₂) relativ kürzerer Belichtungszeit mit dem Aufnahmeende des vorangehenden Teilbildes (B₁ᵥ) des ersten Bildes (B₁) relativ längerer Belichtungszeit im Wesentlichen zusammenfällt.

7. Laufbildkamera nach einem der vorhergehenden Ansprüche,
**dadurch gekennzeichnet,**
**dass** der Zeitpunkt des Aufnahmebeginns des nachfolgenden Teilbildes (B₁ₙ) des ersten Bildes (B₁) relativ längerer Belichtungszeit mit dem Zeitpunkt (t₂) des Aufnahmeendes des zweiten Bildes (B₂) relativ kürzerer Belichtungszeit im Wesentlichen zusammenfällt.

8. Laufbildkamera nach einem der vorhergehenden Ansprüche,
**dadurch gekennzeichnet,**
**dass** der Zeitpunkt des Aufnahmebeginns des nachfolgenden Teilbildes (B₁ₙ) des ersten Bildes (B₁) relativ längerer Belichtungszeit mit dem Zeitpunkt (t₁) des Aufnahmeendes des vorangehenden Teilbildes (B₁ᵥ) des ersten Bildes (B₁) relativ längerer Belichtungszeit und/oder mit dem Zeitpunkt (t₁) des Aufnahmebeginns des zweiten Bildes (B₂) relativ kürzerer Belichtungszeit zusammenfällt.

9. Laufbildkamera nach einem der vorhergehenden Ansprüche,
**dadurch gekennzeichnet,**
**dass** die optoelektronische Sensoreinrichtung (34) zwischen der Aufnahme des vorangehenden Teilbildes (B₁ᵥ) des ersten Bildes (B₁) relativ längerer Belichtungszeit und der Aufnahme des nachfolgenden Teilbildes (B₁ₙ) des ersten Bildes (B₁) relativ längerer Belichtungszeit zurückgesetzt wird.

10. Laufbildkamera nach einem der vorhergehenden Ansprüche,
**dadurch gekennzeichnet,**
**dass** die optoelektronische Sensoreinrichtung (34) zum Zeitpunkt (t₁) des Aufnahmeendes des vorangehenden Teilbildes (B₁ᵥ) des ersten Bildes (B₁) relativ längerer Belichtungszeit und/oder zum Zeitpunkt (t₁) des Aufnahmebeginns des zweiten Bildes (B₂) relativ kürzerer Belichtungszeit zurückgesetzt wird.

11. Laufbildkamera nach Anspruch 10,
**dadurch gekennzeichnet,**
**dass** die optoelektronische Sensoreinrichtung (34) zum Zeitpunkt (t₂) des Aufnahmeendes des zweiten Bildes (B₂) relativ kürzerer Belichtungszeit ein weiteres Mal zurückgesetzt wird.

12. Laufbildkamera nach einem der vorhergehenden Ansprüche,
**dadurch gekennzeichnet,**
**dass** zur Erzeugung der miteinander zu kombinierenden Bilder (B₁, B₂) unterschiedlicher Belichtungszeit die Sensorelemente (36) der optoelektronischen Sensoreinrichtung (34) mittels der Steuereinrichtung (50) so ansteuerbar sind, dass von einem jeweiligen Sensorelement (36) zeitlich nacheinander wenigstens drei Empfangssignale (E₁ - E₃) ausgelesen werden, wobei das erste Empfangssignal (E₁) zur Bildung des vorangehenden Teilbildes (B₁ᵥ) des ersten Bildes (B₁) relativ längerer Belichtungszeit, das zweite Empfangssignal (E₂) zur Bildung des zweiten Bildes (B₂) relativ kürzerer Belichtungszeit und das dritte Empfangssignal (E₃) zur Bildung des nachfolgenden Teilbildes (B₁ₙ) des ersten Bildes (B₁) relativ längerer Belichtungszeit herangezogen werden.

13. Laufbildkamera nach Anspruch 12,
**dadurch gekennzeichnet,**
**dass** das jeweilige Sensorelement (36) zum Zeitpunkt (t₁) des Aufnahmeendes des vorangehenden Teilbildes (B₁ᵥ) des ersten Bildes (B₁) relativ längerer Belichtungszeit und/oder zum Zeitpunkt (t₁) des Aufnahmebeginns des zweiten Bildes (B₂) relativ kürzerer Belichtungszeit zurückgesetzt wird.

14. Laufbildkamera nach Anspruch 13,
**dadurch gekennzeichnet,**
**dass** das jeweilige Sensorelement (36) zum Zeitpunkt (t₂) des Aufnahmeendes des zweiten Bildes (B₂) relativ kürzerer Belichtungszeit ein weiteres Mal zurückgesetzt wird und dass dadurch der Zeitpunkt (t₂) des Aufnahmebeginns des nachfolgenden Teilbildes (B₁ₙ) des ersten Bildes (B₁) relativ längerer Belichtungszeit definiert wird.

15. Laufbildkamera nach Anspruch 13,
**dadurch gekennzeichnet,**
**dass** der Zeitpunkt des Aufnahmebeginns des nachfolgenden Teilbildes (B₁ₙ) des ersten Bildes (B₁) relativ längerer Belichtungszeit mit dem Zeitpunkt (t₁) des Aufnahmebeginns des zweiten Bildes (B₂) relativ kürzerer Belichtungszeit zusammenfällt.

16. Laufbildkamera nach einem der vorhergehenden Ansprüche,
**dadurch gekennzeichnet,**
**dass** die Laufbildkamera mit einem der optoelektronischen Sensoreinrichtung (34) vorgeschalteten mechanischen Verschluss (16) versehen ist.

17. Laufbildkamera nach Anspruch 16,
**dadurch gekennzeichnet,**
**dass** die Laufbildkamera mit einer der optoelektronischen Sensoreinrichtung (34) vorgeschalteten Spiegelumlaufblende (16) versehen ist.

## Claims

1. A digital motion picture camera (10) for the taking of motion pictures comprising an optoelectronic sensor device (34) having a plurality of sensor elements (36) for the generation of received signals in dependence on the exposure time, a digitizing device (40) for the digitizing of the received signals and an electronic control device (50) for the control of the exposure time and the reading out of the received signals and for the evaluation of these received signals, wherein a plurality of images (B₁, B₂) taken with different exposure times are combined with one another by means of the control device (50),
**characterized in that**
the time centers of the images (B₁, B₂) to be combined with one another disposed between a respective start of recording and a respective end of recording coincide at least substantially, with at least one first image (B₁) of relatively longer exposure time and at least one second image (B₂) of relatively shorter exposure time having at least substantially coinciding time centers being combined with one another, with the first image (B₁) of relatively longer exposure time being assembled by means of the control device (50) from at least two part images (B₁ᵥ, B₁ₙ) taken sequentially in time, namely from a preceding part image (B₁ᵥ) and a succeeding part image (B₁ₙ) and with the time center of the first image (B₁) being defined by the time center between the start of recording of the preceding part image (B₁ᵥ) and the end of recording of the succeeding part image (B₁ₙ).

2. A motion picture camera in accordance with claim 1, **characterized in that** the optoelectronic sensor device (50) includes integrating sensor elements (36).

3. A motion picture camera in accordance with claim 1 or claim 2, **characterized in that** the optoelectronic sensor device (34) includes at least one CMOS sensor.

4. A motion picture camera in accordance with any one of the preceding claims, **characterized in that** the first image (B₁) of relatively longer exposure time corresponds to the two part images (B₁ᵥ, B₁ₙ) and additionally to the second image (B₂) of relatively shorter exposure time.

5. A motion picture camera in accordance with any one of the preceding claims, **characterized in that** the received signals (E₁, E₃) of the two part images (B₁ᵥ, B₁ₙ) defining the first image (B₁) of relatively longer exposure time are added by means of the control device (50).

6. A motion picture camera in accordance with any one of the preceding claims, **characterized in that** the time of the start of recording of the second image (B₂) of relatively shorter exposure time substantially coincides with the end of recording of the preceding part image (B₁ᵥ) of the first image (B₁) of relatively longer exposure time.

7. A motion picture camera in accordance with any one of the preceding claims, **characterized in that** the time of the start of recording of the succeeding part image (B₁ₙ) of the first image (B₁) of relatively longer exposure time substantially coincides with the time (t₂) of the end of recording of the second image (B₂) of relatively shorter exposure time.

8. A motion picture camera in accordance with any one of the preceding claims 7, **characterized in that** the time of the start of recording of the succeeding part image (B₁ₙ) of the first image (B₁) of relatively longer exposure time coincides with the time (t₁) of the end of recording of the preceding part image (B₁ᵥ) of the first image (B₁) of relatively longer exposure time and/or with the time (t₁) of the start of recording of the second image (B₂) of relatively shorter exposure time.

9. A motion picture camera in accordance with any one of the preceding claims, **characterized in that** the optoelectronic sensor device (34) is reset between the recording of the preceding part image (B₁ᵥ) of the first image (B₁) of relatively longer exposure time and the recording of the successive part image (B₁ₙ) of the first image (B₁) of relatively longer exposure time.

10. A motion picture camera in accordance with any one of the preceding claims, **characterized in that** the optoelectronic sensor device (34) is reset at the time (t₁) of the end of recording of the preceding part image (B₁ᵥ) of the first image (B₁) of relatively longer exposure time and/or at the time (t₁) of the start of recording of the second image (B₂) of relatively shorter exposure time.

11. A motion picture camera in accordance with claim 10, **characterized in that** the optoelectronic sensor device (34) is reset a further time at the time (t₂) of the end of recording of the second image (B₂) of relatively shorter exposure time.

12. A motion picture camera in accordance with any one of the preceding claims, **characterized in that**, for the generation of the images (B₁, B₂) of different exposure times to be combined with one another, the sensor elements (36) of the optoelectronic sensor device (34) can be controlled by means of the control device (50) such that at least three received signals (E₁ - E₃) are read out sequentially in time from a respective sensor element (36), with the first received signal (E₁) being used for forming the preceding part image (B₁ᵥ) of the first image (B₁) of relatively longer exposure time, the second received signal (E₂) being used for forming the second image (B₂) of relatively shorter exposure time and the third received signal (E₃) being used for forming the succeeding part image (B₁ₙ) of the first image (B₁) of relatively longer exposure time.

13. A motion picture camera in accordance with claim 12, **characterized in that** the respective sensor element (36) is reset at the time (t₁) of the end of recording of the preceding part image (B₁ᵥ) of the first image (B₁) of relatively longer exposure time and/or at the time (t₁) of the start of recording of the second image (B₂) of relatively shorter exposure time.

14. A motion picture camera in accordance with claim 13, **characterized in that** the respective sensor element (36) is reset a further time at the time (t₂) of the end of recording of the second image (B₂) of relatively shorter exposure time; and **in that** the time (t₂) of the start of recording of the succeeding part image (B₁ₙ) of the first image (B₁) of relatively longer exposure time is thereby defined.

15. A motion picture camera in accordance with claim 13, **characterized in that** the time of the start of recording of the succeeding part image (B₁ₙ) of the first image (B₁) of relatively longer exposure time coincides with the time (t₁) of the start of recording of the second image (B₂) of relatively shorter exposure time.

16. A motion picture camera in accordance with any one of the preceding claims, **characterized in that** the motion picture camera is provided with a mechanical shutter (16) connected before the optoelectronic sensor device (34).

17. A motion picture camera in accordance with claim 16, **characterized in that** the motion picture camera is provided with a rotating mirror shutter (16) connected before the optoelectronic sensor device (34).

## Revendications

1. Caméra cinématographique numérique (10) pour la prise d'images cinématographiques, comprenant un système capteur optoélectronique (34) qui comprend une pluralité d'éléments capteurs (36) pour générer des signaux de réception en fonction du temps d'exposition, un système de numérisation (40) pour numériser les signaux de réception, et un système de commande électronique (50) pour commander le temps d'exposition et la lecture des signaux de réception ainsi que pour exploiter ces signaux de réception, dans laquelle, au moyen du système de commande (50), on combine les unes avec les autres plusieurs images (B₁, B₂) prises avec des temps d'exposition différents,
**caractérisée en ce que**
les instants médians, situés entre un commencement et une terminaison respective d'une prise de vue, des images (B₁, B₂) à combiner les unes avec les autres coïncident au moins sensiblement, et au moins une première image (B₁) avec un temps d'exposition relativement plus long et au moins une seconde image (B₂) avec un temps d'exposition relativement plus court et présentant des instants médians au moins sensiblement coïncidants sont combinées l'une avec l'autre, la première image (B₁) avec un temps d'exposition relativement plus long étant composée d'au moins deux images partielles (B₁ᵥ, B₁ₙ) prises l'une après l'autre dans le temps, à savoir une image partielle précédente (B₁ᵥ) et une image partielle successive (B₁ₙ), et l'instant médian de la première image (B₁) est défini par l'instant médian situé entre le commencement de la prise de l'image partielle précédente (B₁ᵥ) et la terminaison de la prise de l'image partielle successive (B₁ₙ).

2. Caméra cinématographique selon la revendication 1,
**caractérisée en ce que** le système capteur optoélectronique (50) comprend des éléments capteurs intégrants (36).

3. Caméra cinématographique selon la revendication 1 ou 2,
**caractérisée en ce que** le système capteur optoélectronique (34) comprend au moins un capteur CMOS.

4. Caméra cinématographique selon l'une des revendications précédentes,
**caractérisée en ce que** la première image (B₁) avec un temps d'exposition relativement plus long correspond aux deux images partielles (B₁ᵥ, B₁ₙ) et additionnellement à la seconde image (B₂) avec un temps d'exposition relativement plus court.

5. Caméra cinématographique selon l'une des revendications précédentes,
**caractérisée en ce que** les signaux de réception (E₁, E₃) des deux images partielles (B₁ᵥ, B₁ₙ) qui définissent la première image (B₁) avec un temps d'exposition relativement plus long sont additionnés au moyen du système de commande (50).

6. Caméra cinématographique selon l'une des revendications précédentes,
**caractérisée en ce que** l'instant du commencement de la prise de la seconde image (B₂) avec un temps d'exposition relativement plus court coïncide sensiblement avec la terminaison de la prise de l'image partielle précédente (B₁ᵥ) de la première image (B₁) avec un temps d'exposition relativement plus long.

7. Caméra cinématographique selon l'une des revendications précédentes,
**caractérisée en ce que** l'instant du commencement de la prise de l'image partielle successive (B₁ₙ) de la première image (B₁) avec un temps d'exposition relativement plus long coïncide sensiblement avec l'instant (t₂) de la terminaison de la prise de la seconde image (B₂) avec un temps d'exposition relativement plus court.

8. Caméra cinématographique selon l'une des revendications précédentes,
**caractérisée en ce que** l'instant du commencement de la prise de l'image partielle successive (B₁ₙ) de la première image (B₁) avec un temps d'exposition relativement plus long coïncide avec l'instant (t₁) de la fin de la prise de l'image partielle précédente (B₁ᵥ) de la première image (B₁) avec un temps d'exposition relativement plus long et/ou avec l'instant (t₁) du commencement de la prise de la seconde image (B₂) avec un temps d'exposition relativement plus court.

9. Caméra cinématographique selon l'une des revendications précédentes,
**caractérisée en ce que** le système capteur optoélectronique (34) est remis à zéro entre la prise de l'image partielle précédente (B₁ᵥ) de la première image (B₁) avec un temps d'exposition relativement plus long et la prise de l'image partielle successive (B₁ₙ) de la première image (B₁) avec un temps d'exposition relativement plus long.

10. Caméra cinématographique selon l'une des revendications précédentes,
**caractérisée en ce que** le système capteur optoélectronique (34) est remis à zéro à l'instant (t₁) de la fin de la prise de l'image partielle précédente (B₁ᵥ) de la première image (B₁) avec un temps d'exposition relativement plus long et/ou à l'instant (t₁) du commencement de la prise de la seconde image (B₂) avec un temps d'exposition relativement plus court.

11. Caméra cinématographique selon la revendication 10,
**caractérisée en ce que** le système capteur optoélectronique (34) est remis à zéro une nouvelle fois à l'instant (t₂) de la fin de la prise de la seconde image (B₂) avec un temps d'exposition relativement plus court.

12. Caméra cinématographique selon l'une des revendications précédentes,
**caractérisée en ce que**, pour générer les images (B₁, B₂) à combiner l'une à l'autre avec des temps d'exposition différents, les éléments capteurs (36) du système capteur électronique (34) peuvent être pilotés au moyen du système de commande (50) de telle façon qu'au moins trois signaux de réception (E₁-E₃) sont lus temporellement les uns après les autres par un élément capteur respectif (36), de sorte que le premier signal de réception (E₁) est exploité pour former l'image partielle précédente (B₁ᵥ) de la première image (B₁) avec un temps d'exposition relativement plus long, le second signal de réception (E₂) est exploité pour former la seconde image (B₂) avec un temps d'exposition relativement plus court, et le troisième signal de réception (E₂) est exploité pour former l'image partielle successive (B₁ₙ) de la première image (B₁) avec un temps d'exposition relativement plus long.

13. Caméra cinématographique selon la revendication 12,
**caractérisée en ce que** l'élément capteur respectif (36) est remis à zéro à l'instant (t₁) de la terminaison de la prise de l'image partielle précédente (B₁ᵥ) de la première image (B₁) avec un temps d'exposition relativement plus long et/ou à l'instant (t₁) du commencement de la prise de la seconde image (B₂) avec un temps d'exposition relativement plus court.

14. Caméra cinématographique selon la revendication 13,
**caractérisée en ce que** l'élément capteur respectif (36) est remis à zéro une nouvelle fois à l'instant (t₂) de la terminaison de la prise de la seconde image (B₂) avec un temps d'exposition relativement plus court, et **en ce que** cela définit l'instant (t₂) du commencement de la prise de l'image partielle successive (B₁ₙ) de la première image (B₁) avec un temps d'exposition relativement plus long.

15. Caméra cinématographique selon la revendication 13,
**caractérisée en ce que** l'instant du commencement de la prise de l'image partielle successive (B₁ₙ) de la première image (B₁) avec un temps d'exposition relativement plus long coïncide avec l'instant (t₁) du commencement de la prise de la seconde image (B₂) avec un temps d'exposition relativement plus court.

16. Caméra cinématographique selon l'une des revendications précédentes,
**caractérisée en ce que** la caméra est dotée d'un obturateur mécanique (16) placé en avant du système capteur optoélectronique (34).

17. Caméra cinématographique selon la revendication 16,
**caractérisée en ce que** la caméra est dotée d'un diaphragme rotatif à miroir (16) placé en avant du système capteur optoélectronique (34).
